Europäisches Patentamt

European Patent Office

Office européen des brevets

(11) Publication number : **0 465 232 A2**

# (12) EUROPEAN PATENT APPLICATION

(21) Application number : **91306021.6**

(22) Date of filing : **02.07.91**

(51) Int. Cl.⁵ : **H04N 9/83, H04N 9/79**

(30) Priority : **05.07.90 JP 178232/90**

(43) Date of publication of application :
**08.01.92 Bulletin 92/02**

(84) Designated Contracting States :
**DE FR GB**

(71) Applicant : **SONY CORPORATION**
**7-35 Kitashinagawa 6-Chome Shinagawa-ku**
**Tokyo 141 (JP)**

(72) Inventor : **Kobayashi, Toshiharu, c/o Patents**
**Division**
**Sony Corporation, 6-7-35 Kitashinagawa**
**Shinagawa-ku, Tokyo 141 (JP)**
Inventor : **Unno, Keisuke, c/o Patents Division**
**Sony Corporation, 6-7-35 Kitashinagawa**
**Shinagawa-ku, Tokyo 141 (JP)**

(74) Representative : **Thomas, Christopher Hugo et**
**al**
**D Young & Co 10 Staple Inn**
**London WC1V 7RD (GB)**

(54) **Recording circuits for mother tapes for copying by contact.**

(57)    A recording apparatus for a mirror mother tape (MT) to be used in a contact printing process includes a unit (7) for converting a chrominance signal of an incoming colour video signal to a lower frequency fC, a unit (8) for generating a beat cancelling signal having a Frequency 2fC from the converted chrominance signal, a unit (4) for adding the beat cancelling signal to a luminance signal of the incoming colour video signal, a unit (9) for combining the down-converted chrominance signal with the luminance signal to which has been added the beat cancelling signal, and a head (15) for recording the combined signal applied from the combining unit on the mirror mother tape (MT).

FIG.1

This invention relates to recording apparatus for mirror mother tapes. Such an apparatus can, for example, be used for copying by contact type magnetic transfer printing, a colour video signal onto a copy tape from a mirror mother tape where the colour video signal has been recorded.

In a contact type magnetic transfer apparatus a mother tape and a copy tape are contacted with each other, and a colour video signal recorded on the mother tape is transferred to the copy tape by applying a magnetic field thereto by a transfer bias head.

The mirror mother tape is prepared by using a recording circuit of a video tape recorder (VTR) in a manner as will now be briefly described. First, a luminance signal and a chrominance signal are separated from a colour video signal to be recorded on a mother tape. Then, the separated luminance signal is converted into a frequency-modulated signal, while the separated chrominance signal is subjected to a frequency conversion to be converted into a chrominance signal of a low frequency. These converted luminance and chrominance signals are then combined or mixed and applied to a magnetic head, whereby the composite signal, that is, the colour video signal, is recorded on the mother tape.

A copy tape is produced by printing the colour video signal from the mirror mother tape using a contact type magnetic printing apparatus. The colour video signal printed on the prepared copy tape is subjected to a frequency demodulation and a frequency conversion by a tape reproducing apparatus to be restored to the original colour video signal, and then an image of the converted colour video signal can be reproduced on a monitor, for example.

However, when the original video signal is reproduced by the tape reproducing apparatus from the copy tape, an unnecessary component with a frequency $fy \pm 2fC$ is generated, where $fy$ is the frequency of the luminance signal and $fC$ is the frequency of the down-converted chrominance signal. Thus, there has been a problem that a noise component of a mesh-like configuration appears in the image displayed on the monitor, due to a secondary beat component, that is, the unnecessary frequency component of $fy \pm 2fC$.

Moreover, it is difficult to record the converted chrominance signal of the relatively low frequency on a relatively thin metal tape, so that it has been necessary to make the recording current of the converted chrominance signal large when recording the converted chrominance signal on the mother tape. In this case, however, the level of the secondary beat component of the frequency $fy \pm 2FC$ becomes larger.

According to the present invention there is provided a recording apparatus for a mirror mother tape to be used in a contact printing process, the apparatus comprising:
means for down-converting a chrominance signal of an incoming colour video signal to a lower frequency $fC$;
means for generating a beat cancelling signal having a frequency $2fC$ from said converted chrominance signal;
means for adding said beat cancelling signal to a luminance signal of said incoming colour video signal;
means for combining said down-converted chrominance signal with said luminance signal to which has been added said beat cancelling signal; and
means for recording the combined signal applied from said combining means on a mirror mother tape.

An embodiment of recording apparatus according to the present invention can be capable of preparing a mirror mother tape in which distortion due to the secondary beat component with a frequency $fy \pm 2fC$ of the frequency converted chrominance signal is substantially eliminated, thereby improving the signal to noise ratio of the chrominance signal recorded on the mother tape.

The invention will now be described by way of example with reference to the accompanying drawings, throughout which like parts are referred to by like references, and in which:

Figure 1 is a block diagram of an embodiment of recording circuit of a mirror mother recording apparatus according to the present invention;

Figure 2 is a block diagram of an example of a beat cancelling circuit of the apparatus of Figure 1;

Figure 3 is a detailed circuit diagram of the beat cancelling circuit; and

Figures 4A and 4B are diagrams for explaining the operation of the circuit of Figure 1.

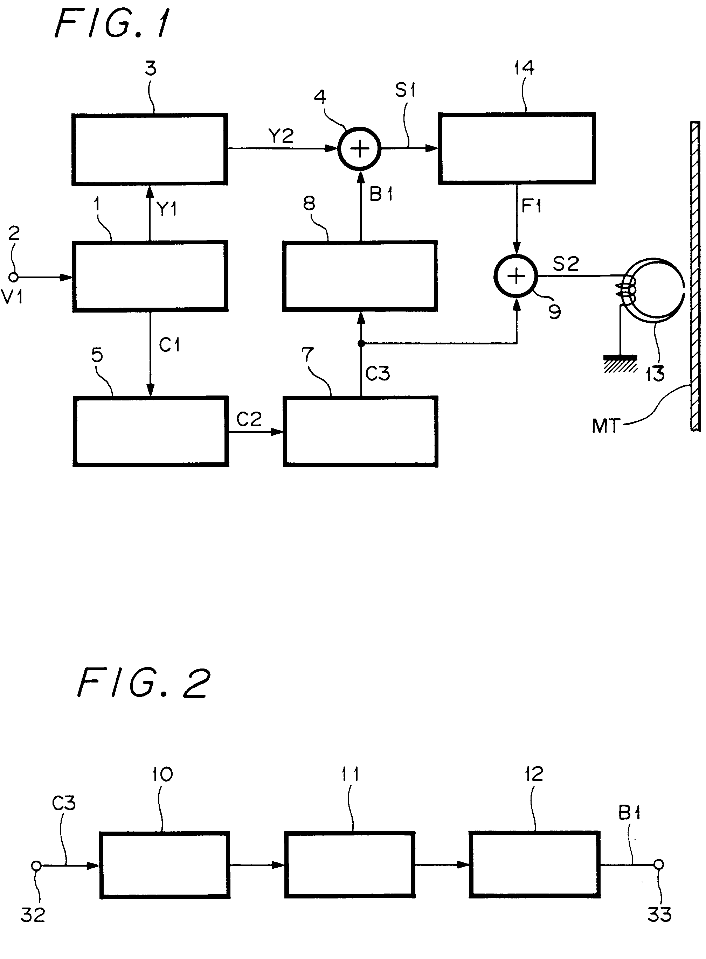

Referring now to Figure 1, in a recording circuit of a mirror mother video tape recorder (VTR) a luminance signal/chrominance signal (Y/C) separation circuit 1 separates an information signal, that is, a colour video signal V1 supplied from an input terminal 2 into a luminance signal Y1 and a chrominance signal C1.

The luminance signal Y1 is emphasized by a pre-emphasis circuit 3 to be converted into a luminance signal Y2, and is applied to one input terminal of an adder 4 acting as a mixing circuit. The chrominance signal C1 is emphasized by a pre-emphasis circuit 5 to be converted into a chrominance signal C2, and is then applied to a chrominance signal low-frequency converting circuit 7. The converting circuit 7 converts a carrier frequency fC (0.74 MHz in this embodiment, for example) of the chrominance signal C2 to a lower frequency, thereby to supply a down-converted chrominance signal C3 to a beat cancelling circuit 8 and to one input terminal of an adder 9 acting as a mixing circuit.

The beat cancelling circuit 8 includes a squaring circuit 10, a band-pass amplifier (BPA) 11 with a centre frequency of $2fC$, and a phase shifter 12, as shown in Figure 2. The beat cancelling circuit 8 generates a beat cancelling signal B1 of a frequency 2fC (1.48 MHz, for example) in accordance with the down-converted chrominance signal C3 applied to an input terminal 32, to apply the beat cancelling signal B1 to the other input of the adder 4 (see Figure 1) from an output terminal 33.

The adder 4 mixes the beat cancelling signal B1 and the luminance signal Y2 to generate a composite signal S1 which is applied to a frequency modulation (FM) circuit 14. The FM circuit 14 subjects the composite signal S1 to frequency modulation to apply the frequency modulated composite signal to the other input of the adder 9 as an FM signal F1. The adder 9 mixes the FM signal F1 and the frequency converted chrominance signal C3 to generate a composite signal S2 which is then supplied to a magnetic head 13 as a current signal to be recorded. The head 13 generates a magnetic field in accordance with the composite signal S2 thereby magnetically to record the composite signal S2 mixed by the FM signal F1 and the frequency converted chrominance signal C3 on a mother tape MT.

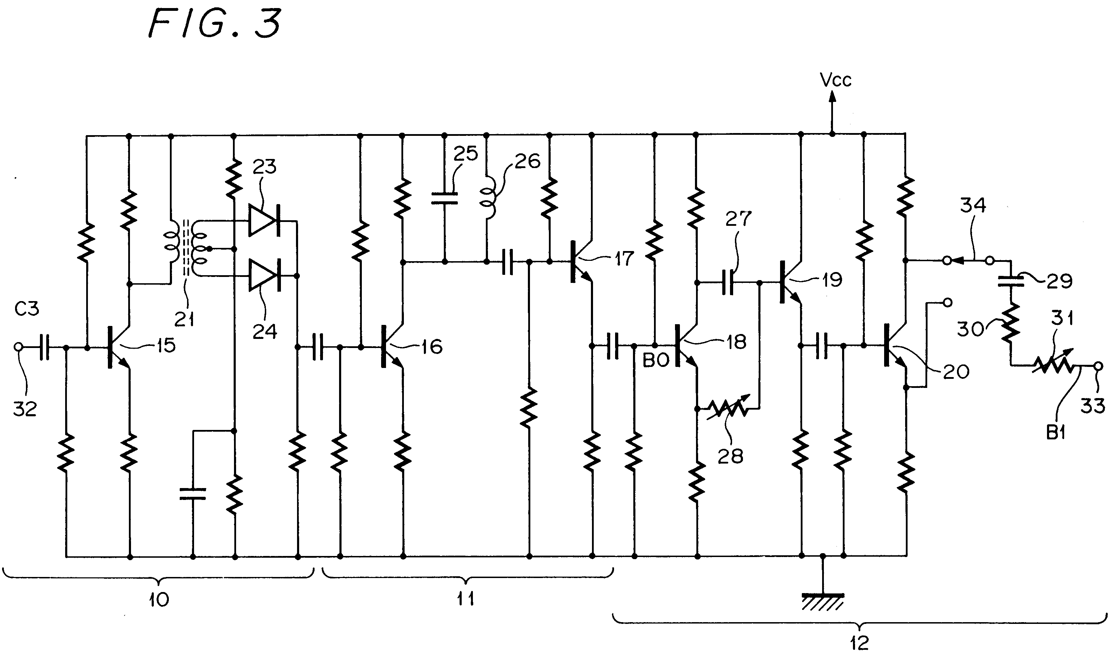

The detailed circuit configuration of the beat cancelling circuit 8 will be explained with reference to Figure 3. It includes the input terminal 32, the output terminal 33 and six transistors 15 to 20, wherein the transistor 15, a transformer 21, diodes 23 and 24 and other related circuit elements form the squaring circuit 10. The transistors 16 and 17, a capacitor 25 and an inductor 26 connected in parallel, and other related elements form the BPA 11. The transistors 18 to 20, a capacitor 27, a variable resistor 28, a switch 34 having one movable contact and two fixed contacts, a capacitor 29, a resistor 30, a variable resistor 31 and other related elements form the phase shifter 12. The squaring circuit 10, the BPA 11 and the phase shifter 12 are connected by AC coupling.

The operation is as follows.

Referring to Figure 1, the colour video signal V1 to be recorded on the mother tape MT is separated into the luminance signal Y1 and the chrominance signal C2 by the Y/C separation circuit 1, and is then subjected to a predetermined pre-emphasis process by the preemphasis circuits 3 and 5 thereby to be applied to one input terminal of the adder 4 as the luminance signal Y2 and to the chrominance signal low-frequency converting circuit 7 as the chrominance signal C2.

The chrominance signal C2 is converted into the frequency converted chrominance signal C3 with the lower frequency fC by the chrominance signal low-frequency converting circuit 7, and then applied to the input terminal 32 of the beat cancelling circuit 8 (see Figure 3 ).

In the squaring circuit 10 forming the beat cancelling circuit 8, there appears a signal of frequency fC x fC and a signal of frequency 2fC etc at cathode sides of the diode 23 and 24, due to the single-phase full-wave rectifying action of the transformer 21 and the diodes 23 and 24. These signals appearing at the cathode sides of the diodes 23 and 24 are applied to the BPA 11 wherein a beat cancelling original signal BO of a frequency 2fC is extracted from these signals by a parallel resonance circuit comprising the capacitor 25 and the inductor 26, and is then applied to the phase shifter 12.

In the phase shifter 12, the beat cancelling original signal BO is adjusted in its gain by the variable resistor 31 and also in its phase by the variable resistor 28, and further its polarity is selected by the switch 34.

These adjusting and selecting processes in the phase shifter 12 will now be explained in detail.

In the first process, at first the beat cancelling circuit 8 is eliminated from the circuit configuration of Figure 1. In this eliminated state,

the composite signal S2 corresponding to the video signal V1 is supplied to the magnetic head 13 to record it on the mother tape MT which is a metal tape of Co-Ni system; next, the information signal thus recorded on the mother tape MT is transferred and printed on the copy tape which is a metal tape having an upper layer of Ba-Fe and a lower layer Co-y by using a contact type magnetic printing apparatus (not shown); and the transferred information signal on the copy tape is reproduced by the tape reproducing apparatus (not shown),

thereby to measure a level of a beat component of frequency 2fC in the reproduced information.

The operations shown inset above are referred hereinafter as recording/playback (REC/PB) operations for a picture.

In the second process, the beat cancelling circuit 8 is inserted as shown in Figure 1, and the variable resistor 31 acting as a gain adjuster is adjusted such that the level of the beat cancelling signal B1 at the output terminal 33 of the beat cancelling circuit 8 becomes equal to the level measured in the first process.

In the third process, the composite signal S2 including the beat cancelling signal B1 whose gain is adjusted in the second process is again subjected to the above-described REC/PB operations thereby to measure a level of the beat component of the frequency 2fC in the reproduced information.

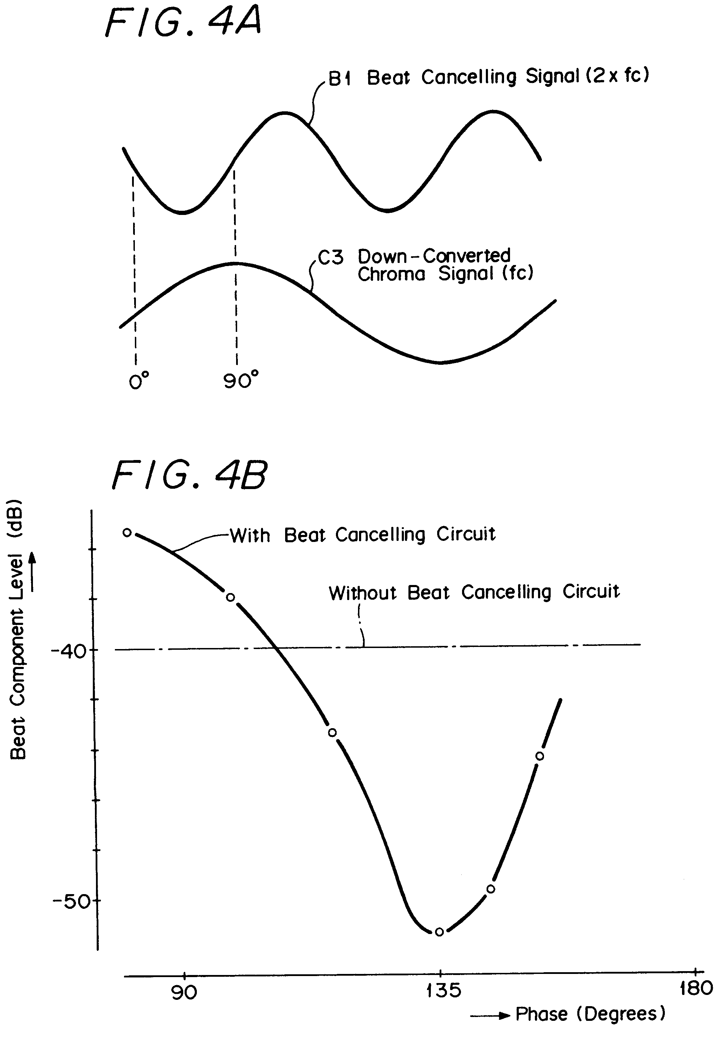

In the fourth process, the amount of phase shift of the beat cancelling signal B1 is adjusted by a predetermined value by the variable resistor 28 acting as a phase adjuster. Now, an amount of the phase shift may be adjusted so as to be a predetermined value in a manner that waveforms of the beat cancelling signal B1 of a frequency 2fC and the low-frequency converted chrominance signal C3 are observed on an oscilloscope, for example, by using current probes as shown in Figure 4A thereby to adjust the amount of the phase shift by viewing a phase difference between these waveforms. In this case, it is possible to select a polarity of the signal B1 by changing over the switch 34. Thereafter, the composite signal S2 including the beat cancelling signal B1 which phase shift amount is adjusted in this manner is again subjected to the above described REC/PB operations thereby to measure a level of the beat component of the frequency 2fC in the reproduced information.

In the fourth process, the amount of phase shift of the beat cancelling signal B1 is adjusted by a predetermined value by the variable resistor 28 acting as a phase adjuster. Now, an amount of the phase shift may be adjusted so as to be a predetermined value in a manner that waveforms of the beat cancelling signal B1 of a frequency 2fC and the low-frequency converted chrominance signal C3 are observed on an oscilloscope, for example, by using current probes as shown in Figure 4A thereby to adjust the amount of the phase shift by viewing a phase difference between these waveforms. In this case, it is possible to select a polarity of the signal B1 by changing over the switch 34. Thereafter, the composite signal S2 including the beat cancelling signal B1 which phase shift amount is adjusted in this manner is again subjected to the above-described REC/PB operations thereby to measure a level of the beat component of the frequency 2fC in the reproduced information.

In the fifth process, the above fourth process is repeated to adjust the variable resistor 28 until the level of the beat component of the frequency 2fC in the reproduced information becomes a minimum value.

Thus, the adjusting processes of the phase shifter 12 is completed.

Figure 4B is a diagram illustrating a comparison between a level of the beat component (noise component) in the reproduced signal of the copy tape appearing when using the recording circuit of the mirror mother VTR in this embodiment with the beat cancelling circuit 8, and that when using the recording circuit of a standard mirror mother VTR without the beat cancelling circuit 8. As clear from Figure 4B, the level of the beat component appearing when using the beat cancelling circuit 8 can be made less than -50 dB by suitably adjusting the amount of the phase shift, so that it will be understood that a level of the beat component can be improved or made smaller by amount -10 dB at a maximum in case of using the beat cancelling circuit 8 when compared with a case of not using the beat cancelling circuit 8 wherein a level of the beat component is about -40 dB as shown by a chain line.

Thus, with this embodiment, the beat cancelling signal B1 whose phase is opposite to that of the secondary beat component of a frequency 2fC appearing in case of reproducing the video signal recorded on the copy tape is generated, and the composite signal S2 including this beat cancelling signal B1 is recorded on the mother tape MT. Therefore, when reproducing the video signal recorded on the copy tape which is magnetically transferred from the mirror mother tape MT, a distortion due to the secondary beat component of a frequency 2fC of the low-frequency converted chrominance signal C3 can be almost eliminated from the reproduced video signal.

Thus, it becomes possible to increase a recording current of the low-frequency converted chrominance signal C3 to be recorded on the mother tape MT if necessary, so that, in case of reproducing the video signal magnetically transferred from the mother tape MT to the copy tape, the signal to noise ratio of the chrominance signal of the reproduced video signal can be improved.

Also, when the video signal thus prepared on the copy tape is reproduced and then an image of the reproduced video signal is displayed on a monitor, for example, the above-described noise component of a mesh-like configuration due to the secondary beat component of a frequency 2fC of the low-frequency converted chrominance signal C3 becomes unobtrusive or quiet relatively to improve the quality of the image on the monitor.

Thus, since both the low-frequency converted chrominance signal and the frequency modulated signal obtained by subjecting the composite signal of the beat cancelling signal and the luminance signal to FM are recorded on a mother tape, when the video signal copied on a copy tape which is magnetically transferred from the mother tape is reproduced, the secondary beat component of a frequency 2fC of the low-frequency converted chrominance signal can be almost eliminated from the reproduced video signal, so that it becomes possible to prepare a mirror mother tape which is capable of substantially cancelling distortion due to the secondary beat component of frequency 2fC.

Moreover, it is possible to increase a recording current of the low-frequency converted chrominance signal to be recorded on the mother tape, so that, when the video signal magnetically transferred from a mirror mother tape to a copy tape is reproduced, the signal to noise ratio of the chrominance signal of the video signal reproduced from the copy tape can be improved.

## Claims

1. A recording apparatus for a mirror mother tape (MT) to be used in a contact printing process, the apparatus comprising:

   means (7) for down-converting a chrominance signal of an incoming colour video signal to a lower frequency fC;

   means (8) for generating a beat cancelling signal having a frequency 2fC from said converted chrominance signal;

means (4) for adding said beat cancelling signal to a luminance signal of said incoming colour video signal;

means (9) for combining said down-converted chrominance signal with said luminance signal to which has been added said beat cancelling signal; and

means (15) for recording the combined signal applied from said combining means on a mirror mother tape (MT).

2. Apparatus according to claim 1 wherein said luminance signal to which has been added said beat cancelling signal is supplied to a frequency modulator (14), and an output from said frequency modulator (14) is supplied to said combining means (9).

3. Apparatus according to claim 2 wherein said beat cancelling signal generating means (8) includes a signal squaring circuit (10), a filter circuit (11) for supplying a carrier component of a frequency 2fC, a phase adjusting circuit (12), and a level adjusting circuit.

4. Apparatus according to claim 2 wherein said beat cancelling signal generating means (8) includes means (10) for squaring the frequency of said converted chrominance signal from said converting means (7) to obtain signals of a frequency fC x fC and a frequency 2fC, means for extracting the signal of a frequency 2fC from the signals from said squaring means (10), and means (12) for adjusting the phase and the gain of said extracted signal of a frequency 2fC to apply it to said adding means (4) as said beat cancelling signal.

# FIG. 1

# FIG. 2

FIG. 3

EP 0 465 232 A2

# FIG. 4A

B1 Beat Cancelling Signal (2 x fc)

C3 Down-Converted Chroma Signal (fc)

0°          90°

# FIG. 4B

Beat Component Level (dB)

With Beat Cancelling Circuit

Without Beat Cancelling Circuit

-40

-50

90          135          180

Phase (Degrees)